# EUROPEAN PATENT SPECIFICATION

(11) **EP 3 073 777 B1**
(45) Date of publication and mention of the grant of the patent: **14.03.2018**
(21) Application number: 14867628.1
(22) Date of filing: 05.12.2014
(51) Int. Cl.: H04W 8/20, H04W 12/04, H04W 76/02, H04M 1/725, H04W 4/00, H04M 3/42

(54) **MANAGEMENT METHOD FOR EMBEDDED UNIVERSAL INTEGRATED CIRCUIT CARD AND RELATED DEVICE**
VERWALTUNGSVERFAHREN FÜR EINGEBETTETE UNIVERSELLE IC-KARTE UND ZUGEHÖRIGE VORRICHTUNG
PROCÉDÉ DE GESTION DE CARTE À CIRCUIT INTÉGRÉ UNIVERSELLE INCORPORÉE ET DISPOSITIF ASSOCIÉ

(30) Priority: 05.12.2013 CN 201310656256
(43) Date of publication of application: 28.09.2016
(73) Proprietor: Huawei Device (Dongguan) Co., Ltd., Dongguan, Guangdong, PRC, 523808 (CN)
(72) Inventor: LONG, Shuiping, Shenzhen Guangdong 518129 (CN)
(74) Representative: Pfenning, Meinig & Partner mbB
(86) International application number: PCT/CN2014/093119
(87) International publication number: WO 2015/081884

(56) References cited:
- WO-A2-2013/048084
- CN-A- 103 167 465
- CN-A- 103 227 991
- US-A1- 2007 169 093
- "Smart Cards; Embedded UICC; Requirements Specification (Release 12)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP REQ, no. V12.1.0, 1 June 2013 (2013-06-01), XP014156985,
- "eUICC Considerations;SCPTEC(13)000052_eUICC_Cons iderations", ETSI DRAFT; SCPTEC(13)000052_EUICC_CONSIDERATIONS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP - SCP-WG-T, 27 May 2013 (2013-05-27), pages 1-11, XP014213008, [retrieved on 2013-05-27]
- ROGERS WIRELESS.: 'Tdoc SA3LI12_074' EMBEDDED UICC REMOTE PROVISIONING DISCUSSION 19 July 2012, XP050637185

## Description

### TECHNICAL FIELD

The present invention relates to the communications field, and in particular, to a management method for an embedded universal integrated circuit card, a related device, and a system.

### BACKGROUND

An embedded UICC (universal integrated circuit card) card (also referred to as a USIM card, a SIM card or a RUIM card) exists in an M2M communications system. The so-called "embedded" means that the UICC card, the USIM card, the SIM card or the RUIM card is not inserted into an M2M terminal by using a card connector, but is directly welded or embedded in a circuit board of the M2M terminal. This type of embedded card is usually intended for vibration prevention or M2M terminal miniaturization, and such a card is referred to as an eUICC (embedded UICC).

The M2M terminal is usually in an outdoor or remote location or a poor environment. Because the eUICC itself is embedded in user equipment, it is difficult to perform a replacement operation. Therefore, a network subscription change for these M2M terminals becomes a problem. A method for remotely and securely configuring network access credential information to the eUICC is urgently needed, and it is required that a network subscription change from an MNO (mobile network operators) to another MNO can be performed.

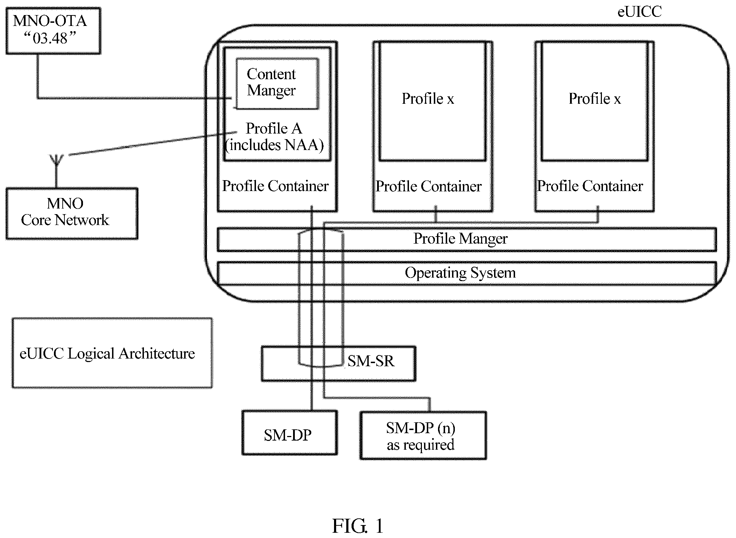

FIG. 1 is an eUICC system architecture that is widely recognized by parties during discussion in current standardization organizations. An SM refers to a subscription manager (subscription manager), DP refers to data preparation (data preparation), and SR refers to secure routing (secure routing). A profile is a combination of a file structure, data, and an application. A file and/or an application (such as a network access application) of an enabled profile (enabled profile) can be selected by using a UICC-Terminal interface. A type of profile is referred to as a provisioning profile (provisioning profile). After being installed on an eUICC, the provisioning profile can be used to access a communications network, thereby providing a transmission capacity for eUICC management and profile management between the eUICC and a remote entity (such as an SM-SR and an SM-DP). Another type of profile is referred to as an operational profile (operational profile). The operational profile contains one or more network access applications and an associated network access credential. An SM-DP entity is responsible for generating a profile (profile), downloading the profile, and installing the profile in the eUICC. The SM-DP may also be referred to as a profile installer (profile installer). The SM-SR entity is responsible for managing a profile in the eUICC and ensuring security of communication between the eUICC and the remote entity (such as an SM-SR and an SM-DP). The SM-SR may also be referred to as a profile manager (profile manager). The MNO (mobile network operator) requests a profile-related service or an eUICC-related service from the SM-SR and the SM-DP, such as ordering a profile from the SM-DP or requesting the SM-SR to manage a profile in the eUICC (operations such as profile status changing and profile deletion). Any one of a communications module supplier, a terminal supplier, a network operator, and an M2M industry customer can order an eUICC from an eUICC supplier, and then embed the eUICC in an M2M terminal (also referred to as user equipment). It should be noted that the eUICC is not only applicable to an M2M terminal, but also applicable to a non-M2M terminal or a conventional terminal, such as a smart phone. The eUICC is not only conducive to diverse ID (industrial design) design of a smart phone, but also facilitates the user's subscription with a new operator. A customer may order a huge quantity of eUICCs, but it is found that no method for batch management of eUICCs is provided in the prior art.

Document US 2007/0169093 A1 discloses a centrally managed solution for all device management activities. This includes a set of device and subscriber registries, which are being constantly updated as new terminals, and subscribers are added to the system. It also includes support for legacy CDMA specific device management standards such as OTASP and OTAPA and support for remote handset configuration via SMS, using the latest standards from the Open Mobile Alliance Client Provisioning. In one embodiment, it includes support for remote handset configuration over IP, using the latest Open Mobile Alliance Client Provisioning and IOTA device management standards.

Document WO 2013/048084 A2 relates to a method for managing a profile in an embedded UICC, and more particularly, to a method for managing a profile in an embedded UICC that enables management information on the profile provided within the embedded UICC to play an essential role for providing communication and additional services, to be provided to a device existing outside the embedded UICC. The present invention also relates to an embedded UICC and to a device provided with the embedded UICC for the method.

Further embedded IUCCs are disclosed e.g. in documents "Smart Cards; Embedded UICC; Requirements Specification (Release 12)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, (20130601), vol. SCP REQ, no. V12.1.0, ", "eUICC Considerations; SCPTEC(13)000052 eUICC Considerations", ETSI DRAFT; SCPTEC(13)000052 EUICC CONSIDERATIONS, EUROPEAN TELECOMMUNICATIONS STANDARDS INSTITUTE (ETSI), 650, ROUTE DES LUCIOLES ; F-06921 SOPHIA-ANTIPOLIS ; FRANCE", and "ROGERS WIRELESS, "Tdoc SA3LI12_074", EMBEDDED UICC REMOTE PROVISIONING DISCUSSION, (20120719). Document CN 103 227 991 A discloses a trigger method, a device and a system for MTC (Machine Type Communication) equipment, wherein the method comprises the following steps: receiving trigger request message sent by an MTC server; confirming that the MTC equipment required to be triggered in the trigger request message is relevant to the MTC server; and triggering the MTC equipment to built a secure connection with the MTC server. According to the invention, only can the MTC equipment relevant to the MTC server be triggered by the MTC server, so that the communication security of the MTC equipment with the MTC server is improved.

### SUMMARY

A technical problem to be resolved in the present invention is to provide a management method for an embedded universal integrated circuit card, a related device, and a system, which can implement batch management on eUICCs.

To resolve the foregoing technical problem, a first aspect of the present invention provides a management method for an embedded universal integrated circuit card, including:
sending, by a subscription manager-secure routing SM-SR entity, a push request that includes a trigger message and at least one user identity to a public land mobile network PLMN/push server, so as to instruct the PLMN/push server to push the trigger message to a target embedded universal integrated circuit card eUICC indicated by the at least one user identity, where the trigger message is used to trigger the target eUICC to initiate communication with the SM-SR entity, wherein the trigger message includes access control information, where the access control information is used for scheduling the communication with the SM-SR entity initiated by the target eUICC;
establishing, by the SM-SR entity, a communications connection to the target eUICC; and
performing, by the SM-SR entity, a management operation on the target eUICC by using the communications connection.

With reference to the first aspect, in a first possible implementation manner, the trigger message includes identifier information and/or address information of the SM-SR entity.

With reference to the first aspect, in a second possible implementation manner, the trigger message includes:
an eUICC management operation type.

With reference to the second possible implementation manner, in a third possible implementation manner, the eUICC management operation type includes:
profile downloading, profile installation, profile deletion, profile enabling, profile disabling, profile status changing, or changing an SM-SR entity associated with an eUICC.

With reference to the second possible implementation manner, in a fourth possible implementation manner, the access control information includes:
back-off timer information or time window information.

With reference to the second possible implementation manner, in a fifth possible implementation manner, the access control information is obtained, by the SM-SR entity, by computing according to load information of the SM-SR entity.

With reference to any one of the first aspect to the fifth possible implementation manner, in a sixth possible implementation manner, before the step of sending, by an SM-SR entity, a push request that includes a trigger message and at least one user identity to a PLMN/push server, the method further includes:
receiving, by the SM-SR entity, an eUICC management service request sent by an external entity, where the eUICC management service request includes at least one eUICC identifier, and querying, by the SM-SR entity, at least one user identity associated with the at least one eUICC identifier; or
receiving, by the SM-SR entity, an eUICC management service request sent by an external entity, where the eUICC management service request includes at least one user identity; or
receiving, by the SM-SR entity, an eUICC management service request sent by an external entity, where the eUICC management service request includes at least one user identity and at least one eUICC identifier.

With reference to the sixth possible implementation manner, in a seventh possible implementation manner, after the step of establishing, by the SM-SR entity, a communications connection to the target eUICC, the method further includes:
returning, by the SM-SR entity and to the external entity, an eUICC identifier of at least one target eUICC to which the communications connection is successfully established.

With reference to any one of the first aspect to the seventh possible implementation manner, in an eighth possible implementation manner, the user identity includes: an international mobile subscriber identity IMSI, a mobile station international ISDN number MSISDN, a public user identity, or a private user identity.

A second aspect of the present invention provides a management method for an embedded universal integrated circuit card, including:
establishing, by the embedded universal integrated circuit card eUICC, a communications connection to an SM-SR entity after receiving a trigger message pushed by the subscription manager-secure routing SM-SR entity; and
acquiring, by the eUICC by using the communications connection, a management operation that is performed on the eUICC by the SM-SR entity.

With reference to the second aspect, in a first possible implementation manner, the trigger message includes identifier information and/or address information of the SM-SR entity, wherein the trigger message further includes access control information, where the access control information is used for scheduling the communication with the SM-SR entity initiated by the target eUICC.

With reference to the first possible implementation manner, in a second possible implementation manner, the trigger message includes:
an eUICC management operation type.

With reference to the second possible implementation manner, in a third possible implementation manner, the eUICC management operation type includes:
profile downloading, profile installation, profile deletion, profile enabling, profile disabling, profile status changing, or changing an SM-SR entity associated with an eUICC.

With reference to the second possible implementation manner, in a fourth possible implementation manner, the access control information includes:
back-off timer information or time window information.

With reference to the second possible implementation manner, in a fifth possible implementation manner, the step of establishing, by the eUICC, a communications connection to an SM-SR entity includes:
generating, by the eUICC, an access time point according to the access control information; and
initiating, by the eUICC, a communications connection request to the SM-SR entity at the access time point, and establishing the communications connection.

With reference to any one of the second aspect to the fifth possible implementation manner, in a sixth possible implementation manner, before the receiving, by an eUICC, a trigger message sent by an SM-SR entity, the method further includes:
attaching user equipment in which the eUICC is located to an operator network by using a provisioning profile provisioning profile or an operational profile operational profile in the eUICC.

A third aspect of the present invention provides an SM-SR entity, including:
a push module, configured to send a push request that includes a trigger message and at least one user identity to a public land mobile network PLMN/push server, so as to instruct the PLMN/push server to push the trigger message to a target embedded universal integrated circuit card eUICC indicated by the at least one user identity, where the trigger message is used to trigger the target eUICC to initiate communication with the SM-SR entity, wherein the trigger message includes access control information, where the access control information is used for scheduling the communication with the SM-SR entity initiated by the target eUICC;
a connection module, configured to establish a communications connection to the target eUICC; and
a management module, configured to perform a management operation on the target eUICC by using the communications connection.

With reference to the third aspect, in a first possible implementation manner, the trigger message includes identifier information and/or address information of the SM-SR entity.

With reference to the third aspect, in a second possible implementation manner, the trigger message includes:
an eUICC management operation type.

With reference to the second possible implementation manner, in a third possible implementation manner, the eUICC management operation type includes:
profile downloading, profile installation, profile deletion, profile enabling, profile disabling, profile status changing, or changing an SM-SR entity associated with an eUICC.

With reference to the second possible implementation manner, in a fourth possible implementation manner, the access control information includes:
back-off timer information or time window information.

With reference to the second possible implementation manner, in a fifth possible implementation manner, the push module is configured to compute the obtained access control information according to load information of the SM-SR entity.

With reference to any one of the third aspect to the fifth possible implementation manner, in a sixth possible implementation manner, the SM-SR entity further includes:
a first receiving module, configured to: receive an eUICC management service request sent by an external entity, where the eUICC management service request includes at least one eUICC identifier, and query at least one user identity associated with the at least one eUICC identifier; or
a second receiving module, configured to receive an eUICC management service request sent by an external entity, where the eUICC management service request includes at least one user identity; or
a third receiving module, configured to receive an eUICC management service request sent by an external entity, where the eUICC management service request includes at least one user identity and at least one eUICC identifier.

With reference to the sixth possible implementation manner, in a seventh possible implementation manner, the SM-SR entity further includes:
a returning module, configured to return, to the external entity, an eUICC identifier of at least one target eUICC to which the communications connection is successfully established.

With reference to any one of the third aspect to the seventh possible implementation manner, in an eighth possible implementation manner, the user identity includes: an international mobile subscriber identity IMSI, a mobile station international ISDN number MSISDN, a public user identity, or a private user identity.

A fourth aspect of the present invention provides an eUICC, including:
a first module, configured to establish a communications connection to an SM-SR entity after receiving a trigger message pushed by the subscription manager-secure routing SM-SR entity, wherein the trigger message includes access control information, where the access control information is used for scheduling the communication with the SM-SR entity initiated by the target eUICC; and
a second module, configured to acquire, by using the communications connection, a management operation that is performed on the eUICC by the SM-SR entity.

With reference to the fourth aspect, in a first possible implementation manner, the trigger message includes identifier information and/or address information of the SM-SR entity.

With reference to the first possible implementation manner, in a second possible implementation manner, the trigger message includes:
an eUICC management operation type.

With reference to the second possible implementation manner, in a third possible implementation manner, the eUICC management operation type includes:
profile downloading, profile installation, profile deletion, profile enabling, profile disabling, profile status changing, or changing an SM-SR entity associated with an eUICC.

With reference to the second possible implementation manner, in a fourth possible implementation manner, the access control information includes:
back-off timer information or time window information.

With reference to the second possible implementation manner, in a fifth possible implementation manner, the first module is configured to: generate an access time point according to the access control information, initiate a communications connection request to the SM-SR entity at the access time point, and establish the communications connection.

With reference to any one of the fourth aspect to the fifth possible implementation manner, in a sixth possible implementation manner, the eUICC further includes:
a third module, configured to attach user equipment in which the eUICC is located to an operator network by using a provisioning profile provisioning profile or an operational profile operational profile.

A fifth aspect of the present invention provides a communications system, including any one of the foregoing SM-SR entities and any one of the foregoing embedded universal integrated circuit cards.

The following beneficial effects are brought by implementing the present invention:

An SM-SR entity sends a trigger message to at least one target eUICC by using an operator network/push server, so as to trigger the target eUICC that receives the trigger message to initiate a communications connection to the SM-SR entity; the SM-SR entity establishes the communications connection to the target eUICC, and then performs a management operation on the target eUICC, which can implement batch management on eUICCs, thereby improving management efficiency.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a diagram of a logical architecture of an eUICC in the prior art;
FIG. 2 is a schematic flowchart of a management method for an embedded universal integrated circuit card according to Embodiment 1 of the present invention;
FIG. 3 is a schematic flowchart of a management method for an embedded universal integrated circuit card according to Embodiment 2 of the present invention;
FIG. 4 is a schematic flowchart of a management method for an embedded universal integrated circuit card according to Embodiment 3 of the present invention;
FIG. 5 is a schematic flowchart of a management method for an embedded universal integrated circuit card according to Embodiment 4 of the present invention;
FIG. 6 is a schematic structural diagram of an SM-SR entity according to Embodiment 1 of the present invention;
FIG. 7 is a schematic structural diagram of an SM-SR entity according to Embodiment 2 of the present invention;
FIG. 8 is a schematic structural diagram of an SM-SR entity according to Embodiment 3 of the present invention;
FIG. 9 is a schematic structural diagram of an eUICC according to Embodiment 1 of the present invention;
FIG. 10 is a schematic structural diagram of an eUICC according to Embodiment 2 of the present invention; and
FIG. 11 is a schematic structural diagram of an eUICC according to Embodiment 3 of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

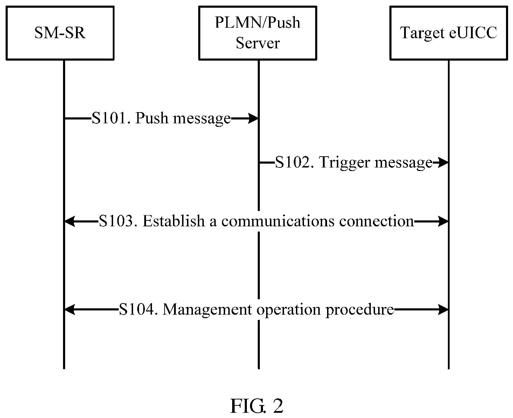

Referring to FIG. 2, FIG. 2 is a flowchart of a management method for an embedded universal integrated circuit card according to an embodiment of the present invention; the method specifically includes:
S101. An SM-SR sends a push message to a PLMN/push server (Push Server).
S102. The PLMN/Push Server sends a trigger message to a target eUICC.
S103. The SM-SR establishes a communications connection to the target eUICC.
S104. The SM-SR performs a management operation procedure on the target eUICC.

Specifically, the embedded universal integrated circuit card eUICC (embedded Universal Integrated Circuit Card, eUICC for short, embedded universal integrated circuit card) is installed in user equipment. After being activated, a profile (provisioning profile or operational profile) stored in the eUICC is used to attach the user equipment in which the eUICC is located to an operator network. In this embodiment, the operator network is the same as or different from the foregoing PLMN (Public Land Mobile Network, PLMN for short, public land mobile network). The foregoing PLMN is a home PLMN of the user equipment, but the operator network is a PLMN to which the user equipment is currently attached, and the foregoing PLMN and the operator network may be the same or may be different. An SM-SR entity sends the push message to the PLMN/Push Server, where the push message includes the trigger message and at least one user identity. When receiving the push message, the PLMN/push server parses out the trigger message from the push message, and sends the trigger message to a target eUICC indicated by the at least one user identity. When detecting the trigger message, the target eUICC initiates a communications connection request to the SM-SR entity; and then the SM-SR entity responds to the communications connection request, and successfully establishes a communications connection to the target eUICC in the user equipment. A subsequent management operation between the SM-SR entity and the target eUICC is performed by using the established communications connection. The management operation may be profile installation, profile downloading, profile status changing, or changing an SM-SR entity associated with an eUICC in the target eUICC in the user equipment. Optionally, the user identity may be an IMSI (International Mobile Subscriber Identity, IMSI for short, international mobile subscriber identity), an MSISDN (Mobile Station International ISDN number, MSISDN for short, mobile station international ISDN number), a public user identity, or a private user identity.

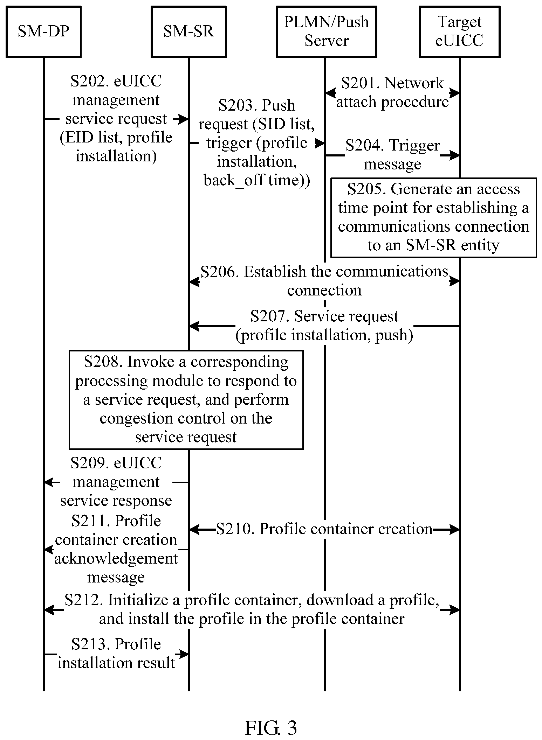

Referring to FIG. 3, FIG. 3 is a schematic flowchart of a management method for an eUICC according to Embodiment 2 of the present invention. In this embodiment, a network side initiates a profile installation operation; the method specifically includes:
S201. User equipment performs a network attach procedure.

Specifically, the user equipment in which a target eUICC is located attaches to a PLMN by using a profile of the target eUICC. The user equipment in which the target eUICC is located initiates a network attach request to the PLMN, where network attach may be CS (Circuit Switched, circuit switched) attach and/or PS (Packet Switched, packet switched) attach.

S202. An SM-DP entity sends an eUICC management service request to an SM-SR entity.

Specifically, the eUICC management service request includes operation type information and an eUICC identifier. For example, an operation type may be profile downloading or profile installation, or the like. The eUICC identifier may be an identifier of one or more target eUICCs. The operation type in this embodiment is profile installation, and an EID list includes at least one eUICC identifier.

Optionally, the eUICC management service request includes at least one user identity. For example, the user identity includes an IMSI, an MSISDN, a public user identity, or a private user identity.

S203. The SM-SR entity sends a push request to a PLMN/Push Server push server.

Specifically, if the eUICC management service request sent by the SM-DP entity includes the operation type information and the eUICC identifier, the SM-SR entity queries a user identity corresponding to the eUICC identifier; the SM-SR entity generates a trigger message according to the operation type information, and generates the push request according to the user identity and the trigger message, where the push request includes the user identity and the trigger message. For example, the push request may be represented by push request (SID list, trigger (profile installation)), where: the "SID list" is a user identity list, and the list includes a user identity of at least one target eUICC; the "trigger ()" is a trigger message; and the "profile installation" in the trigger message is operation type information. The user identity of the target eUICC is used by the PLMN/push server to push the trigger message to the target eUICC.

Optionally, the trigger message further includes access control information, where the access control information is used for scheduling the communication initiated by the target eUICC to the SM-SR entity, that is, used to control a time point of communication initiated by the target eUICC to the SM-SR entity. The access control information includes back-off timer information or time window information. For example, the trigger message may be represented by trigger (profile installation, back_off time), where the "back-off time" is access control information. The access control information may be generated by the SM-SR entity according to load information of the SM-SR entity. For example, it is assumed that the load information is a percentage of maximum bearable load of the SM-SR entity, the SM-SR acquires that current load information of the SM-SR is 50% of the maximum bearable load, and finds, by means of query according to a preset mapping relationship, that corresponding access control information is 30 minutes; or the SM-SR acquires that current load information of the SM-SR is 60% of the maximum bearable load, and finds, by means of query according to a preset mapping association, that corresponding access control information is 40 minutes.

Optionally, if the eUICC management service request sent by the SM-DP entity includes the user identity, the push request is directly generated according to the operation type information and the user identity that are in the eUICC management service request.

S204. The PLMN/push server sends a trigger message to a target eUICC.

Specifically, the PLMN/push server parses out the user identity from a push message, and pushes the trigger message to the target eUICC indicated by the user identity. The PLMN/push server may send, based on a CS or PS manner, the trigger message to the target eUICC indicated by the user identity.

S205. The target eUICC generates an access time point for initiating communication with the SM-SR entity.

Specifically, the user equipment parses out the access control information from the trigger message. For example, if the access control information is a time window (for example, within one hour), the eUICC generates an access time point that is within one hour, and the eUICC initiates a communications connection request to the SM-SR entity at the access time point.

S206. The SM-SR entity establishes a communications connection to the target eUICC.

Specifically, the SM-SR establishes the communications connection to the target eUICC, where the communications connection may be a security communications connection based on an SSL or an HTTPS. An SM-SR side maintains an eUICC identifier list, where the list records the eUICC identifier of the target eUICC to which the communications connection is successfully established.

S207. The target eUICC initiates a service request to the SM-SR entity.

Specifically, the target eUICC parses out the operation type information from the trigger message, and initiates the service request to the SM-SR entity according to the operation type information, where the service request carries operation type information that is the same as that in the trigger message. Optionally, the service request further includes a management mode. The management mode refers to a manner of initiating the service request, that is, push (initiated by a network side) or pull (initiated by an eUICC side). For example, the service request may be represented by service request (profile installation, push), where: the "profile installation" is operation type information; and the "push" is a management mode.

Optionally, the trigger message includes identifier information and/or address information (such an IP address and an URI) of the SM-SR entity; the target eUICC determines, according to the identifier information and/or address information, an object to which the service request is to be sent.

S208. Invoke a corresponding processing module to respond to a corresponding service request, and perform congestion control on the service request.

Specifically, the SM-SR entity parses out the operation type information from the service request, and the operation type obtained through parsing is profile installation. The SM-SR entity invokes a processing module corresponding to the profile installation to respond to the service request, and performs the congestion control on the service request. A method for congestion control may be: performing congestion control according to the operation type information and/or management mode; for example, querying, according to a preset mapping relationship, different priorities corresponding to the operation type information and/or management mode, and performing, according to the found priorities, batch processing on the service requests initiated by target eUICCs.

Optionally, if current load of the SM-SR entity exceeds maximum bearable load, and the service request initiated by the target eUICC cannot be processed any longer, a failure message is sent to the target eUICC corresponding to the service request, where the failure message carries status information and retry time of the SM-SR entity, so that the target eUICC initiates the service request to the SM-SR entity again after the retry time arrives. For example, the failure message may be represented by failure message (busy, try_again time), where: the "busy" is status information indicative of busy; and the "try_again time" is retry time.

S209. The SM-SR entity sends an eUICC management service response.

Specifically, the SM-SR entity acquires an eUICC identifier of a target eUICC whose service request is allowed, and generates an eUICC identifier list, where the list includes an eUICC identifier of at least one target eUICC. The management service response carries operation type information and the eUICC identifier list generated herein.

S210. The SM-SR entity instructs the target eUICC to perform profile container creation.

S211. The SM-SR entity sends a profile container creation acknowledgement message to the SM-DP.

Specifically, the SM-SR entity acquires an identifier of the target eUICC that successfully creates a profile container, and generates an eUICC identifier list, where the list includes at least one identifier of the target eUICC that successfully creates the profile container. The SM-SR entity adds the eUICC identifier list generated herein to the profile container creation acknowledgement message, and sends the profile container creation acknowledgement message to the SM-DP entity.

S212. Initialize a profile container, download a profile, and install the profile in the profile container.

Specifically, the SM-DP entity delivers the profile to the target eUICC, so that the target eUICC installs the profile in a corresponding profile container, and returns, to the SM-DP entity, a success message indicating that the profile is successfully installed.

S213. Send a profile installation result.

Specifically, the SM-DP entity acquires, according to the received success message, the eUICC identifier of the target eUICC that successfully installs the profile, generates an eUICC identifier list, adds the eUICC identifier list generated herein to the profile installation result, and sends the profile installation result to the SM-DP entity.

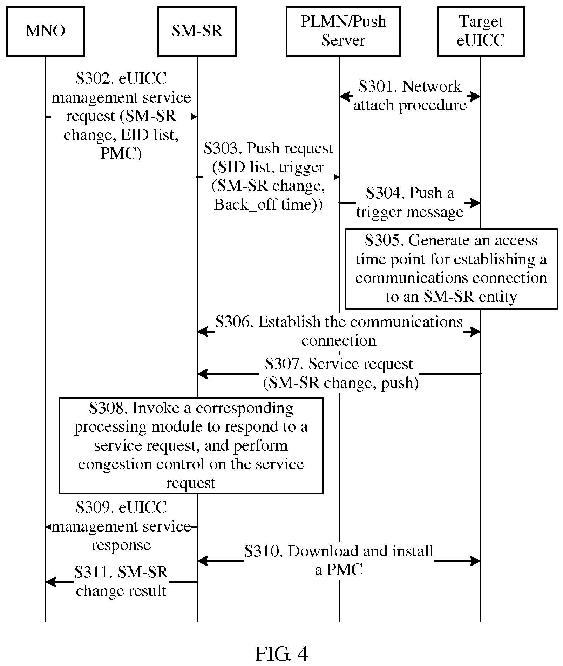

Referring to FIG. 4, FIG. 4 is a schematic flowchart of a management method for an embedded universal integrated circuit card according to Embodiment 3 of the present invention. In this embodiment, a network side initiates an SR-SM entity change operation; the method specifically includes:
S301. User equipment performs a network attach procedure.

The user equipment in which a target eUICC is located attaches to a PLMN by using a profile of the target eUICC. The user equipment in which the target eUICC is located initiates a network attach request to the PLMN, where network attach may be CS attach and/or PS attach.

S302. An MNO sends an eUICC management service request to an SM-SR entity.

Specifically, the eUICC management service request includes operation type information, an eUICC identifier and a PMC of a new SM-SR entity. For example, the eUICC management service request may be represented by management service request (SM-SR change, EID list, PMC), where: the "SM-SR change" is operation type information, which indicates an SM-SR entity change operation herein; the "EID list" is an eUICC identifier list, and the list includes an eUICC identifier of at least one target eUICC; and the "PMC" is a PMC of a new SM-SR entity.

Optionally, the eUICC management service request includes operation type information, a user identity, and a PMC of a new SM-SR entity. For example, a format of the eUICC management service request may be management service request (SM-SR change, SID list, PMC), where: the "SM-SR change" is operation type information; the "SID list" is a user identity list, and the list includes a user identity of at least one target eUICC; and the "PMC" is a PMC of a new SM-SR entity. Optionally, the user identity includes an IMSI, an MSISDN, a public user identity, or a private user identity.

Optionally, the eUICC management service request may not include the operation type information, and an operation type represented by the eUICC management service request may be identified according to a character string of the eUICC management service request. For example, a format of the eUICC management service request may be SM-SR change request (EID list, PMC).

S303. The SM-SR entity sends a push message to a PLMN/push server.

Specifically, if the eUICC management service request includes an eUICC identifier, a corresponding user identity is queried according to the eUICC identifier, so as to obtain a user identity of the target eUICC. If the eUICC management service request includes a user identity, a user identity of the target eUICC is directly acquired from the eUICC management service request. In addition, the operation type information is acquired from the eUICC management service request, a trigger message is generated according to the operation type information, and then the push message is generated according to the user identity and the trigger message. For example, a format of the push request may be push request (SID list trigger (SM-SR change)), where: the "SID list" is the user identity list, and the list includes the user identity of the at least one target eUICC; the "trigger ()" is a trigger message; and the "SM-SR change" is the operation type information, which indicates the SM-SR entity change operation herein.

Optionally, the trigger message further includes access control information, where the access control information is used for scheduling the communication initiated by the target eUICC to the SM-SR, that is, used to control a time point of communication initiated by the target eUICC to the SM-SR entity. The access control information may be back-off timer information. For example, a format of the push request may be push request (SID list, trigger (SM-SR change, back_off time)). The access control information may be generated by the SM-SR entity according to load information of the SM-SR entity. For example, the SM-SR acquires that current load information of the SM-SR is 50% of an overall processing capacity, and finds, by means of query according to a preset mapping relationship, that corresponding access control information is 30 minutes; or the SM-SR acquires that current load information of the SM-SR is 60% of an overall processing capacity, and finds, by means of query according to a preset mapping association, that corresponding access control information is 40 minutes.

S304. The PLMN/push server sends a trigger message to a target eUICC.

Specifically, the PLMN/push server parses out the trigger message and the user identity from the acquired push request, and pushes the trigger message to a target eUICC indicated by a user identity. The PLMN/push server may send, based on a CS or PS manner, the trigger message to the target eUICC indicated by the user identity.

S305. The target eUICC generates an access time point for establishing a communications connection to the SM-SR.

Specifically, the target eUICC generates a random number between an interval [0, 1], and multiplies the generated random number by the access control information to obtain the access time point, so that the target eUICC initiates a communications connection request to the SM-SR entity at the access time point.

It should be understood that generation of the random number and computation of the access time point may be performed by the SM-SR entity. The SM-SR entity adds the access time point that is obtained through computation to the trigger message, and the target eUICC parses out the access time point from the trigger message. For example, a format of the trigger message is trigger (SM-SR change, random time), where the "random time" is an access time point. Access time at which the target eUICC accesses the SM-SR entity is controlled by using the access time point, which can effectively prevents a large quantity of target eUICCs from simultaneously accessing the SM-SR entity, thereby avoiding congestion.

S306. The SM-SR establishes a communications connection to the target eUICC.

Optionally, the target eUICC initiates the communications connection request to the SM-SR entity at a corresponding access time point. The SM-SR entity responds to the communications connection request, and establishes the communications connection to the target eUICC. The SM-SR entity maintains an eUICC identifier list, where the eUICC identifier list records an identifier of the target eUICC that successfully establishes the communications connection to the SM-SR entity.

S307. The target eUICC initiates a service request to the SM-SR entity.

Specifically, the target eUICC parses out the operation type information from the trigger message, and initiates the service request to the SM-SR entity according to the operation type information, where the service request carries operation type information that is the same as that in the trigger message. Optionally, the service request further includes a management mode. The management mode refers to a manner of initiating the service request, that is, push (initiated by a network side) or pull (initiated by an eUICC side). For example, the service request may be represented by service request (profile installation, push), where: the "profile installation" is operation type information; and the "push" is a management mode.

S308. Invoke a processing module corresponding to a service type, and perform congestion control on the service request.

Specifically, in this embodiment, the operation type information is SM-SR change. The SM-SR entity invokes a processing module corresponding to the profile installation to respond to the service request, and performs the congestion control on the service request. A method for congestion control may be: performing congestion control according to the operation type information and/or management mode; for example, querying, according to a preset mapping relationship, different priorities corresponding to the operation type information and/or management mode.

Optionally, if the SM-SR entity is currently overloaded, and cannot process the service request, a failure message is sent to the target eUICC, where the failure message carries status information and retry time of the SM-SR entity, so that the target eUICC initiates the service request to the SM-SR entity again after the retry time arrives.

S309. The SM-SR entity sends an eUICC management service response to an MNO.

Specifically, the SM-SR entity maintains an eUICC identifier list, where the eUICC identifier list includes an eUICC identifier of the target eUICC that receives the service request, adds the eUICC identifier list to the eUICC management service response, and sends the eUICC management service response to the MNO. For example, a format of the management service response is management service response (EID list), where the "EID list" indicates an eUICC identifier of the target eUICC corresponding to the received service request.

S310. Download and install a PMC.

Specifically, the SM-SR entity sends the PMC to the target eUICC, so that the target eUICC installs a PMC of a new SM-SR entity. After installation succeeds, a success message is returned to the SM-SR entity.

S311. Send an SM-SR change result to the MNO.

Specifically, the SM-SR entity adds an identifier of the target eUICC that successfully installs the PMC to the SM-SR change result, and sends the SM-SR change result to the MNO.

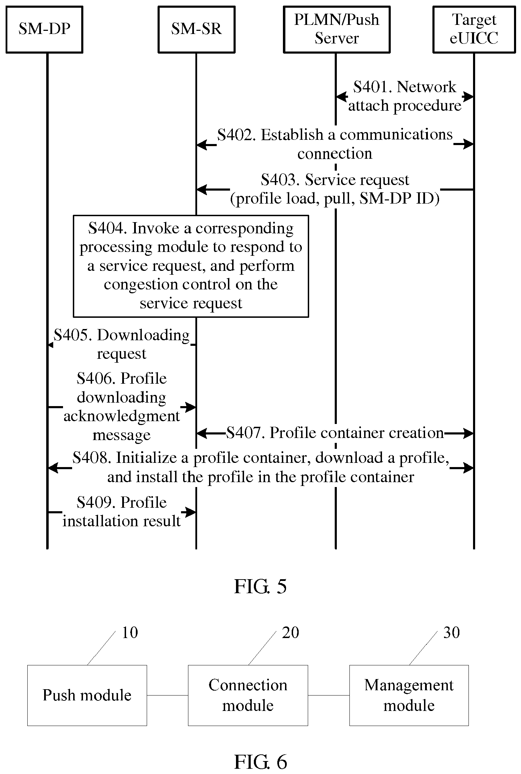

Referring to FIG. 5, FIG. 5 is a schematic flowchart of a management method for an embedded universal integrated circuit card according to Embodiment 4 of the present invention. In this embodiment, a target eUICC proactively initiates a service request, and operation type information in the service request is profile installation; the method includes:
S401. User equipment performs a network attach procedure.

Specifically, the target eUICC initiates an attach request to a PLMN/push server, and attaches to a home PLMN by using a provisioning profile stored in the target eUICC.

S402. A target eUICC establishes a communications connection to an SM-SR entity.

S403. The target eUICC initiates a service request to the SM-SR entity, where the service request includes operation type information, a management mode and an identifier of an SM-DP entity.

S404. The SM-SR entity invokes a corresponding module to response to a corresponding service request, and performs congestion control on the service request.

S405. The SM-SR entity sends a downloading request to an SM-DP.

Specifically, the downloading request includes an identifier of the target eUICC to which the communications connection is successfully established.

S406. The SM-DP entity returns a downloading acknowledgement message to the SM-SR entity.

S407. Perform a profile container creation procedure.

S408. Initialize a profile container, download a profile, and install the profile in the profile container.

S409. The SM-DP entity sends a profile installation result to the SM-SR entity.

Referring to FIG. 6, FIG. 6 is a schematic structural diagram of an SM-SR entity according to Embodiment 1 of the present invention. In this embodiment, the SM-SR entity includes a push module 10, a connection module 20, and a management module 30, where
the push module 10 is configured to send a push request that includes a trigger message and at least one user identity to a public land mobile network PLMN/push server, so as to instruct the PLMN/push server to push the trigger message to a target embedded universal integrated circuit card eUICC indicated by the at least one user identity, where the trigger message is used to trigger the target eUICC to initiate communication with the SM-SR entity;
the connection module 20 is configured to establish a communications connection to the target eUICC; and
the management module 30 is configured to perform a management operation on the target eUICC by using the communications connection.

This embodiment and method embodiment 1 derive from a same idea, and technical effects brought by this embodiment and method embodiment 1 are also the same. For a specific working process, reference is made to the description of method embodiment 1, and details are not described herein again.

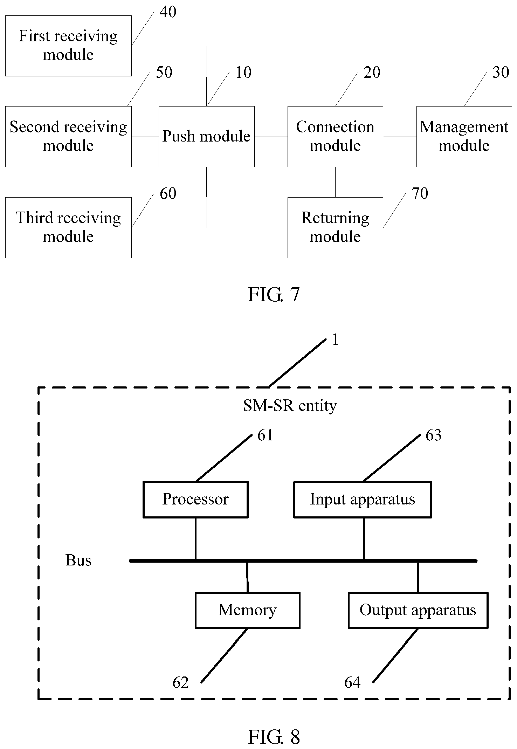

Further, referring to FIG. 7, FIG. 7 is a schematic structural diagram of an SM-SR entity according to Embodiment 2 of the present invention. In this embodiment, in addition to a push module 10, a connection module 20, and a management module 30, the SM-SR entity further includes a first receiving module 40, a second receiving module 50, a third receiving module 60, and a returning module 70, where
the first receiving module 40 is configured to: receive an eUICC management service request sent by an external entity, where the eUICC management service request includes at least one eUICC identifier, and query at least one user identity associated with the at least one eUICC identifier; or
the second receiving module 50 is configured to receive an eUICC management service request sent by an external entity, where the eUICC management service request includes at least one user identity; or
the third receiving module 60 is configured to receive an eUICC management service request sent by an external entity, where the eUICC management service request includes at least one user identity and at least one eUICC identifier; and
the returning module 70 is configured to return, to the external entity, an eUICC identifier of at least one target eUICC to which the communications connection is successfully established.

Optionally, the push module 10 is configured to compute the obtained access control information according to load information of the SM-SR entity.

This embodiment and method embodiments 2 to 4 derive from a same idea, and technical effects brought by this embodiment and method embodiments 2 to 4 are also the same. For details, reference is made to the descriptions of the foregoing method embodiments, and details are not described herein again.

Referring to FIG. 8, FIG. 8 is a schematic structural diagram of an SM-SR entity according to Embodiment 3 of the present invention, where the SM-SR entity is referred to as an SM-SR entity 1 below. The SM-SR entity 1 includes a processor 61, a memory 62, an input apparatus 63, and an output apparatus 64. There may be one or more processors 61 of the SM-SR entity 1. One processor is used as an example in FIG. 8. In some embodiments of the present invention, the processor 61, the memory 62, the input apparatus 63, and the output apparatus 64 may be connected by using a bus or in another manner; in FIG. 8, that the components of the SM-SR entity 1 are connected by using a bus is used as an example.

The memory 62 stores a set of program code, and the processor 61 is configured to invoke the program code stored in the memory 62, so as to perform the following operations:
sending a push request that includes a trigger message and at least one user identity to a public land mobile network PLMN/push server, so as to instruct the PLMN/push server to push the trigger message to a target embedded universal integrated circuit card eUICC indicated by the at least one user identity, where the trigger message is used to trigger the target eUICC to initiate communication with the SM-SR entity;
establishing a communications connection to the target eUICC; and
performing a management operation on the target eUICC by using the communications connection.

In some embodiments of the present invention, the processor 61 is further configured to compute, according to load information of the processor 61, access control information included in the trigger information.

In some embodiments of the present invention, the processor 61 is further configured to perform the following operations:
receiving an eUICC management service request sent by an external entity, where the eUICC management service request includes at least one eUICC identifier, and querying at least one user identity associated with the at least one eUICC identifier; or
receiving an eUICC management service request sent by an external entity, where the eUICC management service request includes at least one user identity; or
receiving an eUICC management service request sent by an external entity, where the eUICC management service request includes at least one user identity and at least one eUICC identifier.

In some embodiments of the present invention, the processor 61 is further configured to perform the following operation:
returning, to the external entity, an eUICC identifier of at least one target eUICC to which the communications connection is successfully established.

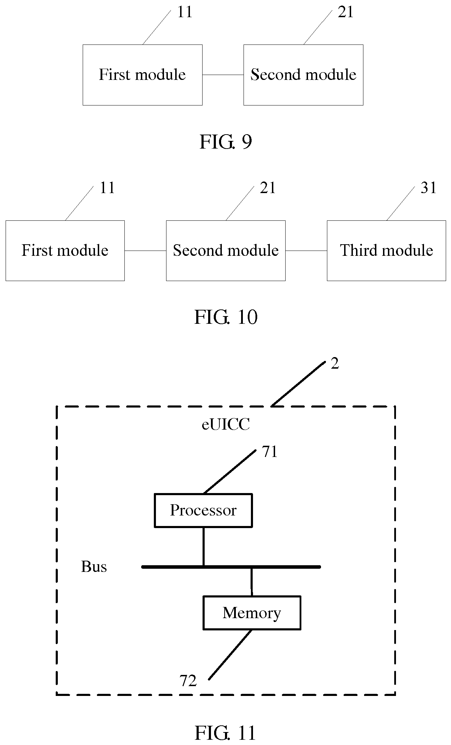

Referring to FIG. 9, FIG. 9 is a schematic structural diagram of an eUICC according to Embodiment 1 of the present invention. In this embodiment, the eUICC includes a first module 11 and a second module 21, where
the first module 11 is configured to establish a communications connection to an SM-SR entity after receiving a trigger message pushed by the subscription manager-secure routing SM-SR entity; and
the second module 21 is configured to acquire, by using the communications connection, a management operation that is performed on the eUICC by the SM-SR entity.

Further, referring to FIG. 10, FIG. 10 is a schematic structural diagram of an eUICC according to Embodiment 2 of the present invention. In this embodiment, the eUICC further includes a third module 31, where
the third module 31 is configured to attach user equipment in which the eUICC is located to an operator network by using a provisioning profile provisioning profile or an operational profile operational profile.

Optionally, a trigger message further includes access control information; and the first module 11 is configured to: generate an access time point according to the access control information, initiate a communications connection request to the SM-SR entity at the access time point, and establish the communications connection.

Referring to FIG. 11, FIG. 11 is a schematic structural diagram of an eUICC according to Embodiment 3 of the present invention, where the eUICC is referred to as an eUICC2 below. The eUICC2 includes a processor 71 and a memory 72. There may be one or more processors 71 in the eUICC2. One processor is used as an example in FIG. 11. In some embodiments of the present invention, the processor 71 and the memory 72 may be connected by using a bus or in another manner; in FIG. 11, that the components of the eUICC2 are connected by using a bus is used as an example.

The memory 72 stores a set of program code, and the processor 71 is configured to invoke the program code stored in the memory 72, so as to perform the following operations:
establishing a communications connection to an SM-SR entity after receiving a trigger message pushed by the subscription manager-secure routing SM-SR entity; and
acquiring, by using the communications connection, a management operation that is performed on the eUICC by the SM-SR entity.

In some embodiments of the present invention, the processor 71 is configured to: generate an access time point according to the access control information, initiate a communications connection request to the SM-SR entity at the access time point, and establish the communications connection.

In some embodiments of the present invention, the processor 71 is further configured to perform the following operation:
attaching user equipment in which the eUICC is located to an operator network by using a provisioning profile provisioning profile or an operational profile operational profile.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM), or the like.

What is disclosed above is merely exemplary embodiments of the present invention, and certainly is not intended to limit the scope of the claims of the present invention. A person of ordinary skill in the art may understand that all or some of processes that implement the foregoing embodiments and equivalent modifications made in accordance with the claims of the present invention shall fall within the scope of the present invention.

## Claims

1. A management method for an embedded universal integrated circuit card, eUICC, comprising:
sending (S101, S203, S303), by a subscription manager-secure routing, SM-SR, entity, a push request that comprises a trigger message and at least one user identity to a public land mobile network, PLMN, /push server, so as to instruct the PLMN/push server to push (S102, S204, S304) the trigger message to a target embedded universal integrated circuit card, eUICC, indicated by the at least one user identity, wherein the trigger message is used to trigger the target eUICC to initiate communication with the SM-SR entity, wherein the trigger message comprises access control information, wherein the access control information is used for scheduling the communication with the SM-SR entity initiated by the target eUICC;
establishing (S103, S206, S306, S402), by the SM-SR entity, a communications connection to the target eUICC; and
performing (S104, S210, S310, S407), by the SM-SR entity, a management operation on the target eUICC by using the communications connection;
wherein the management operation comprises:
profile downloading, profile installation, profile status changing, or changing an SM-SR entity associated with an eUICC.

2. The method according to claim 1, wherein the profile is a combination of a file structure, data, and an application.

3. The method according to claim 1 or 2, wherein the trigger message comprises:
an eUICC management operation type.

4. The method according to claim 3, wherein the access control information comprises:
back-off timer information or time window information.

5. The method according to claim 3 or 4, wherein the access control information is obtained, by the SM-SR entity, by computing according to load information of the SM-SR entity.

6. The method according to any one of claims 1 to 5, wherein before the step of sending (S203, S303), by an SM-SR entity, a push request that comprises a trigger message and at least one user identity to a PLMN/push server, the method further comprises:
receiving (S202, S302), by the SM-SR entity, an eUICC management service request sent by an external entity, wherein the eUICC management service request comprises at least one eUICC identifier, and querying, by the SM-SR entity, at least one user identity associated with the at least one eUICC identifier; or
receiving (S202, S302), by the SM-SR entity, an eUICC management service request sent by an external entity, wherein the eUICC management service request comprises at least one user identity; or
receiving (S202, S302), by the SM-SR entity, an eUICC management service request sent by an external entity, wherein the eUICC management service request comprises at least one user identity and at least one eUICC identifier.

7. The method according to claim 6, wherein after the step of establishing (S206, S306), by the SM-SR entity, a communications connection to the target eUICC, the method further comprises:
returning (S209, S309), by the SM-SR entity and to the external entity, an eUICC identifier of at least one target eUICC to which the communications connection is successfully established.

8. A management method for an embedded universal integrated circuit card, eUICC, comprising:
establishing (S103, S206, S306, S402), by the eUICC, a communications connection to an subscription manager-secure routing, SM-SR, entity after receiving (S102, S204, S304) a trigger message pushed by the SM-SR entity, wherein the trigger message comprises access control information, wherein the access control information is used for scheduling the communications connection established by the eUICC with the SM-SR entity; and
acquiring (S104, S210, S310, S407), by using the communications connection, a management operation that is performed on the eUICC by the SM-SR entity;
wherein the management operation comprises:
profile downloading, profile installation, profile status changing, or changing an SM-SR entity associated with an eUICC.

9. The method according to claim 8, wherein the profile is a combination of a file structure, data, and an application.

10. The method according to claim 8 or 9, wherein the trigger message comprises:
an eUICC management operation type.

11. The method according to claim 10, wherein the access control information comprises:
back-off timer information or time window information.

12. The method according to claim 10 or 11, the step of establishing (S206, S306), by the eUICC, a communications connection to an SM-SR entity comprising:
generating (S205, S305), by the eUICC, an access time point according to the access control information; and
initiating, by the eUICC, a communications connection request to the SM-SR entity at the access time point, and establishing the communications connection.

13. The method according to any one of claims 8 to 12, wherein before the receiving (S102, S204, S304), by an eUICC, a trigger message sent by an SM-SR entity, the method further comprises:
attaching (S201, S301, S401) user equipment in which the eUICC is located to an operator network by using a provisioning profile or an operational profile in the eUICC.

14. A subscription manager-secure routing, SM-SR, entity, comprising:
a memory (62) configured to store a set of program code; and
a processor (61) configured to invoke the program code stored in the memory (62), so as to perform the following operations:
sending a push request that includes a trigger message and at least one user identity to a public land mobile network, PLMN, /push server, so as to instruct the PLMN/push server to push the trigger message to a target embedded universal integrated circuit card, eUICC, indicated by the at least one user identity, where the trigger message is used to trigger the target eUICC to initiate communication with the SM-SR entity, wherein the trigger message comprises access control information, wherein the access control information is used for scheduling the communications connection established by the eUICC with the SM-SR entity;
establishing a communications connection to the target eUICC; and
performing a management operation on the target eUICC by using the communications connection;
wherein the management operation comprises:
profile downloading, profile installation, profile status changing, or changing an SM-SR entity associated with an eUICC.

15. An embedded universal integrated circuit card, eUICC, comprising:
a memory (72) configured to store a set of program code; and
a processor (71) configured to invoke the program code stored in the memory (72), so as to perform the following operations:
establishing a communications connection to an subscription manager-secure routing, SM-SR, entity after receiving a trigger message pushed by the SM-SR entity, wherein the trigger message comprises access control information, wherein the access control information is used for scheduling the communications connection established by the eUICC with the SM-SR entity; and
acquiring, by using the communications connection, a management operation that is performed on the eUICC by the SM-SR entity;
wherein the management operation comprises:
profile downloading, profile installation, profile status changing, or changing an SM-SR entity associated with an eUICC.

## Patentansprüche

1. Verwaltungsverfahren für eine eingebettete universelle Chipkarte (eUICC - "embedded Universal Integrated Circuit Card"), welches Folgendes umfasst:
Senden (S101, S203, S303), durch eine SM-SR("Subscription Manager-Secure Routing")-Einheit, einer Push-Anfrage, die eine Auslösenachricht und mindestens eine Benutzeridentität aufweist, an ein/en PLMN ("Public Land Mobile Network") / Push-Server, um so das/den PLMN/Push-Server anzuweisen, die Auslösenachricht an eine Ziel-eUICC ("embedded Universal Integrated Circuit Card") zu schieben (S102, S204, S304), die durch die mindestens eine Benutzeridentität angegeben wird, wobei die Auslösenachricht verwendet wird, um die Ziel-eUICC zu veranlassen, eine Kommunikation mit der SM-SR-Einheit zu initiieren, wobei die Auslösenachricht Zugangssteuerungsinformationen aufweist, wobei die Zugangssteuerungsinformationen zum Terminieren der Kommunikation mit der SM-SR-Einheit, die durch die Ziel-eUICC initiiert wird, verwendet werden;
Herstellen (S103, S206, S306, S402), durch die SM-SR-Einheit, einer Kommunikationsverbindung zu der Ziel-eUICC; und
Durchführen (S104, S210, S310, S407), durch die SM-SR-Einheit, einer Verwaltungsoperation auf der Ziel-eUICC durch Verwendung der Kommunikationsverbindung;
wobei die Verwaltungsoperation Folgendes umfasst:
Profildownload, Profilinstallation, Profilstatusänderung oder Änderung einer SM-SR-Einheit, die mit einer eUICC assoziiert ist.

2. Verfahren nach Anspruch 1, wobei das Profil eine Kombination aus einer Dateistruktur, Daten und einer Anwendung ist.

3. Verfahren nach Anspruch 1 oder 2, wobei die Auslösenachricht Folgendes aufweist: einen Typ der eUICC-Verwaltungsoperation.

4. Verfahren nach Anspruch 3, wobei die Zugangssteuerungsinformationen Folgendes aufweisen:
Backoff-Timer-Informationen oder Zeitfenster-Informationen.

5. Verfahren nach Anspruch 3 oder 4, wobei die Zugangssteuerungsinformationen durch Berechnung gemäß Lastinformationen der SM-SR-Einheit durch die SM-SR-Einheit erhalten werden.

6. Verfahren nach einem der Ansprüche 1 bis 5, wobei, vor dem Schritt des Sendens (S203, S303), durch eine SM-SR-Einheit, einer Push-Anfrage, die eine Auslösenachricht und mindestens eine Benutzeridentität aufweist, an ein/en PLMN/Push-Server, das Verfahren Folgendes umfasst:
Empfangen (S202, S302), durch die SM-SR-Einheit, einer eUICC-Verwaltungsdienstanfrage, die durch eine externe Einheit gesendet wird, wobei die eUICC-Verwaltungsdienstanfrage mindestens einen eUICC-Identifikator aufweist, und Abfragen, durch die SM-SR Einheit, mindestens einer Benutzeridentität, die mit dem mindestens einen eUICC-Identifikator assoziiert ist; oder
Empfangen (S202, S302), durch die SM-SR-Einheit, einer eUICC-Verwaltungsdienstanfrage, die durch eine externe Einheit gesendet wird, wobei die eUICC-Verwaltungsdienstanfrage mindestens eine Benutzeridentität aufweist; oder
Empfangen (S202, S302), durch die SM-SR-Einheit, einer eUICC-Verwaltungsdienstanfrage, die durch eine externe Einheit gesendet wird, wobei die eUICC-Verwaltungsdienstanfrage mindestens eine Benutzeridentität und mindestens einen eUICC-Identifikator aufweist.

7. Verfahren nach Anspruch 6, wobei, nach dem Schritt des Herstellens (S206, S306), durch die SM-SR-Einheit, einer Kommunikationsverbindung zu der Ziel-eUICC, das Verfahren ferner Folgendes umfasst:
Zurücksenden (S209, S309), durch die SM-SR-Einheit und an die externe Einheit, eines eUICC-Identifikators von mindestens einer Ziel-eUICC, zu welcher die Kommunikationsverbindung erfolgreich hergestellt wurde.

8. Verwaltungsverfahren für eine eingebettete universelle Chipkarte (eUICC - embedded Universal Integrated Circuit Card), welches Folgendes umfasst:
Herstellen (S103, S206, S306, S402), durch die eUICC, einer Kommunikationsverbindung zu einer SM-SR("Subscription Manager-Secure Routing")-Einheit nach dem Empfangen (S102, S204, S304) einer Auslösenachricht, die durch die SM-SR-Einheit geschoben wird, wobei die Auslösenachricht Zugangssteuerungsinformationen aufweist, wobei die Zugangssteuerungsinformationen zum Terminieren der Kommunikationsverbindung, die durch die eUICC hergestellt wird, mit der SM-SR-Einheit verwendet werden; und Erfassen (S104, S210, S310, S407), durch Verwendung der Kommunikationsverbindung, einer Verwaltungsoperation, die auf der eUICC durchgeführt wird, durch die SM-SR-Einheit;
wobei die Verwaltungsoperation Folgendes umfasst:
Profildownload, Profilinstallation, Profilstatusänderung oder Änderung einer SM-SR-Einheit, die mit einer eUICC assoziiert ist.

9. Verfahren nach Anspruch 8, wobei das Profil eine Kombination aus einer Dateistruktur, Daten und einer Anwendung ist.

10. Verfahren nach Anspruch 8 oder 9, wobei die Auslösenachricht Folgendes aufweist: einen Typ der eUICC-Verwaltungsoperation.

11. Verfahren nach Anspruch 10, wobei die Zugangssteuerungsinformationen Folgendes aufweisen:
Backoff-Timer-Informationen oder Zeitfenster-Informationen.

12. Verfahren nach Anspruch 10 oder 11, wobei der Schritt des Herstellens (S206, S306), durch die eUICC, einer Kommunikationsverbindung zu einer SM-SR-Einheit Folgendes umfasst:
Erzeugen (S205, S305), durch die eUICC, eines Zugangszeitpunktes gemäß der Zugangssteuerungsinformationen; und
Initiieren, durch die eUICC, einer Kommunikationsverbindungsanfrage an die SM-SR-Einheit zu dem Zugangszeitpunkt, und Herstellen der Kommunikationsverbindung.

13. Verfahren nach einem der Ansprüche 8 bis 12, wobei, vor dem Empfangen (S102, S204, S304), durch eine eUICC, einer Auslösenachricht, die durch eine SM-SR-Einheit gesendet wird, das Verfahren ferner Folgendes umfasst:
Verbinden (S201, S301, S401) von einem Endgerät, in welchem sich die eUICC befindet, mit einem Betreibernetzwerk durch Verwendung eines Bereitstellungsprofils oder eines Betriebsprofils in der eUICC.

14. SM-SR("Subscription Manager-Secure Routing")-Einheit, welche Folgendes aufweist:
einen Speicher (62), der zum Speichern eines Satzes von Programmcode konfiguriert ist; und
einen Prozessor (61), der zum Aufrufen des Programmcodes, der in dem Speicher (62) gespeichert ist, konfiguriert ist, um so die folgenden Operationen durchzuführen:
Senden einer Push-Anfrage, die eine Auslösenachricht und mindestens eine Benutzeridentität beinhaltet, an ein/en PLMN ("Public Land Mobile Network") / Push-Server, um so das/den PLMN/Push-Server anzuweisen, die Auslösenachricht an eine Ziel-eUICC ("embedded Universal Integrated Circuit Card") zu schieben, die durch die mindestens eine Benutzeridentität angegeben wird, wobei die Auslösenachricht verwendet wird, um die Ziel-eUICC zu veranlassen, eine Kommunikation mit der SM-SR-Einheit zu initiieren, wobei die Auslösenachricht Zugangssteuerungsinformationen aufweist, wobei die Zugangssteuerungsinformationen zum Terminieren der Kommunikationsverbindung, die durch die eUICC hergestellt wird, mit der SM-SR-Einheit verwendet werden;
Herstellen einer Kommunikationsverbindung mit der Ziel-eUICC; und
Durchführen einer Verwaltungsoperation auf der Ziel-eUICC durch Verwendung der Kommunikationsverbindung;
wobei die Verwaltungsoperation Folgendes umfasst:
Profildownload, Profilinstallation, Profilstatusänderung oder Änderung einer SM-SR-Einheit, die mit einer eUICC assoziiert ist.

15. Eingebettete universelle Chipkarte (eUICC - "embedded Universal Integrated Circuit Card"), welche Folgendes aufweist:
einen Speicher (72), der zum Speichern eines Satzes von Programmcode konfiguriert ist; und
einen Prozessor (71), der zum Aufrufen des Programmcodes, der in dem Speicher (72) gespeichert ist, konfiguriert ist, um so die folgenden Operationen durchzuführen:
Herstellen einer Kommunikationsverbindung zu einer SM-SR("Subscription Manager-Secure Routing")-Einheit nach dem Empfangen einer Auslösenachricht, die durch die SM-SR-Einheit geschoben wird, wobei die Auslösenachricht Zugangssteuerungsinformationen aufweist, wobei die Zugangssteuerungsinformationen zum Terminieren der Kommunikationsverbindung, die durch die eUICC hergestellt wird, mit der SM-SR-Einheit verwendet werden; und
Erfassen, durch Verwendung der Kommunikationsverbindung, einer Verwaltungsoperation, die auf der eUICC durchgeführt wird, durch die SM-SR-Einheit;
wobei die Verwaltungsoperation Folgendes umfasst:
Profildownload, Profilinstallation, Profilstatusänderung oder Änderung einer SM-SR-Einheit, die mit einer eUICC assoziiert ist.

## Revendications

1. Procédé de gestion pour une carte à puce universelle incorporée eUICC, comprenant les étapes suivantes :
envoyer (S101, S203, S303), par une entité de routage sécurisé de gestionnaire d'abonnements, SM-SR, une requête de Push qui comporte un message de déclenchement et au moins une identité utilisateur à un serveur PLMN (réseau public mobile terrestre)/push, afin d'ordonner au serveur PLMN/push de pousser (S102, S204, S304) le message de déclenchement vers une carte à puce universelle incorporée, eUICC, indiquée par ladite identité utilisateur, le message de déclenchement étant utilisé pour déclencher l'eUICC cible pour initier une communication avec l'entité SM-SR, le message de déclenchement comportant des informations de contrôle d'accès, les informations de contrôle d'accès étant utilisées pour planifier la communication avec l'entité SM-SR initiée par l'eUICC cible ;
établir (S103, S206, S306, S402), par l'entité SM-SR, une connexion de communication avec l'eUICC cible ; et
exécuter (S104, S210, S310, S407), par l'entité SM-SR, une opération de gestion sur l'eUICC cible en utilisant la connexion de communication ;
l'opération de gestion comprenant :
un téléchargement de profils, une installation de profils, un changement d'état de profil, ou changer une entité SM-SR associée à un eUICC.

2. Procédé selon la revendication 1, dans lequel le profil est une combinaison d'une structure de fichier, de données, et d'une application.

3. Procédé selon la revendication 1 ou 2, dans lequel le message de déclenchement comprend :
un type d'opération de gestion d'eUICC.

4. Procédé selon la revendication 3, dans lequel les informations de contrôle d'accès comprennent :
des informations de temporisateur de réduction de puissance ou des informations de fenêtre de temps.

5. Procédé selon la revendication 3 ou 4, dans lequel les informations de contrôle d'accès sont obtenues, par l'entité SM-SR, par calcul selon des informations de charge de l'entité SM-SR.

6. Procédé selon l'une quelconque des revendications 1 à 5 dans lequel, avant l'étape consistant à envoyer (S203, S303), par une entité SM-SR, une requête de Push qui comporte un message de déclenchement et au moins une identité utilisateur à un serveur PLMN/push, le procédé comprenant en outre :
recevoir (S202, S302), par l'entité SM-SR, une requête de service de gestion d'eUICC envoyée par une entité externe, la requête de service de gestion d'eUICC comportant au moins un identifiant eUICC, et demander, par l'entité SM-SR, au moins une identité utilisateur associée au dit identifiant eUICC ; ou
recevoir (S202, S302), par l'entité SM-SR, une requête de service de gestion d'eUICC envoyée par une entité externe, la requête de service de gestion d'eUICC comportant au moins une identité utilisateur ; ou
recevoir (S202, S302), par l'entité SM-SR, une requête de service de gestion d'eUICC envoyée par une entité externe, la requête de service de gestion d'eUICC comportant au moins une identité utilisateur et au moins un identifiant eUICC.

7. Procédé selon la revendication 6 dans lequel, après l'étape consistant à établir (S206, S306), par l'entité SM-SR, une connexion de communication avec l'eUICC cible, le procédé comprend en outre :
retourner (S209, S309), par l'entité SM-SR et à l'entité externe, un identifiant d'eUICC d'au moins un eUICC cible avec lequel la connexion de communication est établie avec succès.

8. Procédé de gestion pour une carte à puce universelle incorporée, eUICC, comprenant :
établir (S103, S206, S306, S402), par l'eUICC, une connexion de communication avec une entité de routage sécurisé de gestionnaire d'abonnements, SM-SR, après avoir reçu (S102, S204, S304) un message de déclenchement poussé par l'entité SM-SR, le message de déclenchement comportant des informations de contrôle d'accès, les informations de contrôle d'accès étant utilisées pour planifier la connexion de communication établie par l'eUICC avec l'entité SM-SR ; et
acquérir (S104, S210, S310, S407), en utilisant la connexion de communication, une opération de gestion qui est exécutée sur l'eUICC par l'entité SM-SR ;
l'opération de gestion comprenant :
un téléchargement de profils, une installation de profils, un changement d'état de profil, ou changer une entité SM-SR associée à un eUICC.

9. Procédé selon la revendication 8, dans lequel le profil est une combinaison d'une structure de fichier, de données, et d'une application.

10. Procédé selon la revendication 8 ou 9, dans lequel le message de déclenchement comprend :
un type d'opération de gestion d'eUICC.

11. Procédé selon la revendication 10, dans lequel les informations de contrôle d'accès comprennent :
des informations de temporisateur de réduction de puissance ou des informations de fenêtre de temps.

12. Procédé selon la revendication 10 ou 11, l'étape consistant à établir (S206, S306), par l'eUICC, une connexion de communication avec une entité SM-SR comprenant :
générer (S205, S305), par l'eUICC, un point de temps d'accès selon les informations de contrôle d'accès ; et
initier, par l'eUICC, une requête de connexion de communication avec l'entité SM-SR au point de temps d'accès, et établir la connexion de communication.

13. Procédé selon l'une quelconque des revendications 8 à 12 dans lequel, avant l'étape consistant à recevoir (S102, S204, S304), par un eUICC, un message de déclenchement envoyé par une entité SM-SR, le procédé comprend en outre :
attacher (S201, S301, S401) un équipement utilisateur dans lequel l'eUICC est situé à un réseau opérateur en utilisant un profil de provisionnement ou un profil opérationnel dans l'eUICC.

14. Entité de routage sécurisé de gestionnaire d'abonnements, SM-SR, comprenant :
une mémoire (62) configurée pour stocker un ensemble de codes de programme ; et
un processeur (61) configuré pour appeler le code de programme stocké dans la mémoire (62), pour exécuter les opérations suivantes :
envoyer une requête de Push qui comporte un message de déclenchement et au moins une identité utilisateur à un serveur PLMN (réseau public mobile terrestre)/push, afin d'ordonner au serveur PLMN/push de pousser le message de déclenchement vers une carte à puce universelle incorporée, eUICC, indiquée par ladite identité utilisateur, le message de déclenchement étant utilisé pour déclencher l'eUICC cible pour initier une communication avec l'entité SM-SR, le message de déclenchement comportant des informations de contrôle d'accès, les informations de contrôle d'accès étant utilisées pour planifier la connexion de communication établie par l'eUICC avec l'entité SM-SR ;
établir une connexion de communication avec l'eUICC cible ; et
exécuter une opération de gestion sur l'eUICC cible en utilisant la connexion de communication ;
l'opération de gestion comprenant :
un téléchargement de profils, une installation de profils, un changement d'état de profil, ou changer une entité SM-SR associée à un eUICC.

15. Carte à puce universelle incorporée, eUICC, comprenant :
une mémoire (72) configurée pour stocker un ensemble de codes de programme ; et
un processeur (71) configuré pour appeler le code de programme stocké dans la mémoire (72), pour exécuter les opérations suivantes :
établir une connexion de communication avec une entité de routage sécurisé de gestionnaire d'abonnements, SM-SR, après avoir reçu un message de déclenchement poussé par l'entité SM-SR, le message de déclenchement comportant des informations de contrôle d'accès, les informations de contrôle d'accès étant utilisées pour planifier la connexion de communication établie par l'eUICC avec l'entité SM-SR ; et
acquérir, en utilisant la connexion de communication, une opération de gestion qui est exécutée sur l'eUICC par l'entité SM-SR ;
l'opération de gestion comprenant :
un téléchargement de profils, une installation de profils, un changement d'état de profil, ou changer une entité SM-SR associée à un eUICC.
